(19) Europäisches Patentamt
European Patent Office
Office européen des brevets

(11) **EP 2 059 902 B1**

(12) **EUROPEAN PATENT SPECIFICATION**

(45) Date of publication and mention
of the grant of the patent:
**07.04.2010 Bulletin 2010/14**

(21) Application number: **07826142.7**

(22) Date of filing: **27.08.2007**

(51) Int Cl.:
*G06T 5/00* (2006.01)          *H04N 1/409* (2006.01)
*G06T 5/50* (2006.01)

(86) International application number:
**PCT/IB2007/053418**

(87) International publication number:
**WO 2008/026150 (06.03.2008 Gazette 2008/10)**

(54) **METHOD AND APPARATUS FOR IMAGE ENHANCEMENT**

VERFAHREN UND VORRICHTUNG ZUR BILDERWEITERUNG

PROCÉDÉ ET APPAREIL POUR UNE AMÉLIORATION D'IMAGE

(84) Designated Contracting States:
**AT BE BG CH CY CZ DE DK EE ES FI FR GB GR
HU IE IS IT LI LT LU LV MC MT NL PL PT RO SE
SI SK TR**

(30) Priority: **28.08.2006 EP 06119613**

(43) Date of publication of application:
**20.05.2009 Bulletin 2009/21**

(73) Proprietor: **Koninklijke Philips Electronics N.V.
5621 BA Eindhoven (NL)**

(72) Inventors:
• **MUIJS, Remco T. J.**
**5656 AE Eindhoven (NL)**
• **TEGENBOSCH, Jeroen A. P.**
**5656 AE Eindhoven (NL)**

(74) Representative: **Uittenbogaard, Frank
Philips
Intellectual Property & Standards
P.O. Box 220
5600 AE Eindhoven (NL)**

(56) References cited:
**EP-A2- 0 971 315     EP-A2- 1 215 883
US-A- 5 493 622**

• **LU J ET AL: "CONTRAST ENHANCEMENT VIA
MULTISCALE GRADIENT TRANSFORMATION"
PROCEEDINGS OF THE INTERNATIONAL
CONFERENCE ON IMAGE PROCESSING (ICIP)
AUSTIN, NOV. 13 - 16, 1994, LOS ALAMITOS, IEEE
COMP. SOC. PRESS, US, vol. VOL. 2 CONF. 1, 13
November 1994 (1994-11-13), pages 482-486,
XP000522678 ISBN: 0-8186-6952-7**

**Description**

FIELD OF THE INVENTION

The present invention relates in general to computing an output image on the basis of an input image, wherein the input image may be, for example, a still image or part of a video sequence.

BACKGROUND OF THE INVENTION

A wide variety of image enhancement techniques is available for improving the image quality as perceived by observers of both still images and video sequences.

An important class of enhancement techniques is formed by contrast enhancement functions. An example of an algorithm, referred to as the Burt-pyramid algorithm, implementing a contrast enhancement function is disclosed in US 5,717,789. This algorithm permits the synthesis of an original high-resolution image from component sub-spectra images without the introduction of spurious spatial frequencies due to aliasing. In accordance with the Burt-pyramid algorithm, an original image is split into a plurality of sub-images, with a hierarchy of separate component images. Each sub-image may be a Laplacian image comprising of different spatial frequency ranges of the original image plus a remnant Gaussian image.

Image enhancement typically results in changing the pixel values within the corresponding frequency ranges. An original image Go can be enhanced into an enhanced image $G_0'$ :

$$G_0' = g_0 D_0 + g_1 D_1 + g_2 D_2 + ... + g_{n-1} D_{n-1} + G_n, \qquad (1)$$

with $g_n \geq 1$, g the pixel enhancement factor, and $D_n$ the sub-images or derived sub-images in corresponding spectral frequency ranges of the original image. $D_n$ can be understood as a set of sub-images derived from "primary" sub-images $G_n$. In the context of this disclosure, both $D_n$ and $G_n$ can be understood as sub-images, wherein $D_n$ is derived from $G_n$, through down-sampling. Enhancing pixel values in all frequencies ranges, except for the lowest frequency range, can enhance both sharpness and contrast in smooth image areas, with little contrast.

However, changing the pixel values regardless of image content may result in overshoots, enhancing pixel values in areas with edges higher than desired and necessitating clipping or other measures to prevent image distortion, which generally results in poor image quality.

SUMMARY OF THE INVENTION

It is an object of the present invention to provide a solution for contrast enhancement of an input image that alleviates the above problem and prevents or limits the amount of overshoot and thereby the amount of clipping.

This object is realized by a method as defined in claim 1 and an apparatus as defined in claim 13.

The present invention proposes using the pixel values from the input image in a multi-scale approach for modifying pixels in the input image. In a method according to the present invention, the input image is split into multiple sub-images, each sub-image corresponding to a frequency band of the input image. Although typically all sub-images will be processed, the present invention is not limited thereto.

A pixel headroom signal is calculated by quantifying the margin available for enhancement of pixel values of pixels in the input image. Although the pixel headroom signal can be based solely on the input image, other variants that include the use of further information will be described below.

The pixel headroom signal is used to calculate pixel enhancement factors for pixels within respective sub-images of the multiple sub-images to be modified. Typically, such pixel enhancement factors will be computed for every pixel in the respective sub-image. The pixel enhancement factors are calculated in such a way that the margin as quantified by the pixel headroom signal is spread across the respective sub-images to be modified. In their turn, the pixel enhancement factors are used to modify the respective sub-images to be modified by enhancing pixel values in the sub-images, using the corresponding pixel enhancement factors. The modified sub-images are subsequently used to generate the output image.

By using a multi-scale approach and explicitly taking into account the pixel headroom available for pixels in the input image by spreading the available pixel headroom across the sub-images through the use of the pixel headroom signal in the pixel enhancement factor calculation, it is possible to enhance the sub-images as well as the output image, without or with only a limited amount of overshoot, thereby requiring no or only a limited amount of clipping. The present invention therefore provides accurate clipping control.

By enhancement using a multi-scale approach, the available headroom can be used to enhance features within particular sub-images. Individual sub-images can be favored by allocating a proportionally large amount of headroom to them, thereby allowing the use of larger pixel enhancement factors within the favored sub-images while maintaining the same level of control.

In a preferred embodiment, the sub-images are modified consecutively and a pixel headroom signal is calculated for each sub-image to be modified. Moreover, the pixel headroom signal calculated for a respective sub-image being modified takes into account pixel headroom (margin) consumed as a result of previously modified sub-images. Consequently, the margin consumed in generating a modified sub-image will no longer be available for modifying further sub-images. In this manner, pixel headroom can be distributed by allocation of pixel headroom over sub-images as well as through prioritization of sub-image processing. Meanwhile, the ability to prevent or limit the amount of overshoot is preserved. In addition, headroom not consumed in enhancing previously modified sub-images is available for enhancement of further sub-images.

In another preferred embodiment, the order of sub-image processing is established by correlating the calculated pixel headroom signal with pixel values in respective sub-images. In this manner, the potential for enhancement in the respective sub-images is established in order to decide on the order of sub-image processing. Based on the pixel headroom signal, a variety of processing orders can be selected, such as a greedy enhancement algorithm wherein sub-images with the largest potential for enhancement are enhanced first. Alternatively, a more subtle enhancement algorithm can be envisaged wherein the sub-images in which only minor enhancements are possible are enhanced first, thereby safeguarding this enhancement and resulting in a more balanced enhancement over the sub-images as compared to the greedy enhancement algorithm.

In a further embodiment, the order of sub-image processing is fixed, starting with the sub-image comprising information in the highest frequency range of the input image to the sub-image comprising information in the lowest frequency range of the input image. As a result, the high-frequency bands are favored, which results in enhanced image sharpness.

In a further embodiment, two pixel headroom signals are calculated, a pixel headroom signal quantifying the margin of the pixel values of respective pixels of the input image to a maximum pixel value and a further pixel headroom signal quantifying the margin of the pixel values of respective pixels of the input image to a minimum pixel value. Subsequently, the pixel enhancement factor is based on the pixel headroom signal when the pixel value of the pixel of the sub-image is positive, and is based on the further pixel headroom signal when the pixel value of the pixel of the sub-image is negative. This particular feature allows enhancement of bright details, such as highlights, in predominantly dark regions or, alternatively, enhancement of dark details in predominantly bright regions.

When changing pixel values in individual sub-images without precautionary measures, so-called halo artifacts may appear either as false-light emissions or as false shadows around high-contrast object edges.

In a preferred embodiment, the pixel headroom signal takes into account the spatial profile of the pixel headroom in a region around respective pixels by calculating a pixel headroom signal that quantifies the smallest pixel headroom in an area surrounding the respective pixels. As a result, the pixel headroom signal may be used to determine a regional maximum linear gain that will not result in clipping within a region. Consequently, enhancements within a region will be more continuous.

In a further preferred embodiment, the pixel headroom signal is filtered by using a different filter for each respective sub-image to be modified in order to calculate pixel enhancement factors that comprise frequency components within the same frequency range as the sub-image. In combination with the previous embodiment, which takes the pixel headroom within a region of a pixel of a sub-image into account, a substantially smoother frequency spectrum of the pixel enhancement factors can be obtained. The probability that halos are introduced within a sub-image is thus reduced.

In a further embodiment, the pixel enhancement factor is upper-bounded by a single maximum pixel enhancement factor value for all sub-images. When sufficient bandwidth is available, all modified sub-images will be enhanced by using this maximum pixel enhancement factor, thereby resulting in an enhancement resembling a global linear histogram stretch. As a result, "light-emission" artifacts that result from over-enhancing regions with an already substantial contrast are prevented.

In a further embodiment, the pixel enhancement factor is based on the maximum linear gain of a pixel in a sub-image without clipping, attenuated by a scaling factor $\alpha$ from within the range of 0 to 1. Consequently, only a fraction $\alpha$ of the available headroom will be used for the current sub-image, and a fraction of $(1-\alpha)$ of the available headroom will be available for enhancing the remaining sub-images. The "light-emission" artifacts would thus be attenuated as well.

In a preferred embodiment, the pixel enhancement factor for a pixel of a sub-image is set to attenuate the pixel value of the pixel, when the difference between the maximum and minimum pixel value of pixels of the sub-image within a pre-defined region around the pixel is below a threshold value. In doing so, noise resulting from e.g. DCT quantization can be reduced.

In a further preferred embodiment, the present method is used to enhance a color image. In order to enhance a color image, the luminance component of the color image is used as input image and is split into sub-images. After processing, the output image is an enhanced luminance component of the color image. Subsequently, an enhanced color image may be formed by scaling the RGB components of the color image, using a scaling factor determined by the ratio of the enhanced luminance component over the luminance component. Use of this particular method renders it possible to substantially preserve color saturation of the original color image.

The present invention further relates to a computer program product tangibly embodied in a record carrier, the computer program product comprising instructions which, when executed, cause a processor to perform the steps of any one of the methods of claims 1 to 12.

The present invention further relates to an image signal comprising pixel values forming an input image and a set of pixel enhancement factors allowing processing of the input image in accordance with any one of the methods of claims 1 to 12.

BRIEF DESCRIPTION OF THE DRAWINGS

These and other aspects will be further elucidated and described with reference to the drawing in which:

Fig. 1 is a flow chart of a method of changing pixel values;
Fig. 2 is a flow chart of a preferred method of changing pixel values in a color image;
Fig. 3 is a schematic representation illustrating aggressive uniform histogram stretching;
Fig. 4 is a schematic representation illustrating enhancement in the absence of sufficient headroom for aggressive uniform histogram stretching; and
Fig. 5 is a block diagram of an apparatus according to the present invention within a possible application.

Throughout the drawings, identical reference numerals refer to the same elements, or to elements that perform the same function.

DESCRIPTION OF EMBODIMENTS

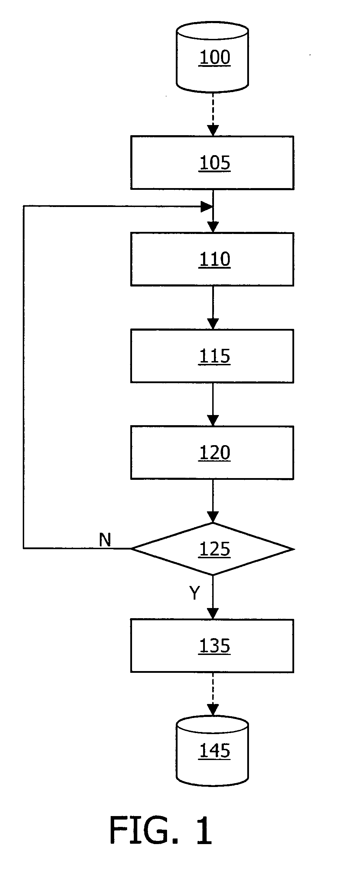

Fig. 1 is a flow chart of a method according to the present invention. It depicts the program flow for enhancing a luminance input image 100 represented by pixel values. In a step 105, the input image 100 is split into multiple sub-images. Each multiple sub-image comprises information from a respective frequency band of the input image 100.

Typically, each sub-image will be processed in order to generate a modified sub-image. The modified sub-images are subsequently combined in order to generate, in a step 135, an enhanced luminance image 145.

Three steps are required to generate a modified sub-image:

- a step 110 of calculating a pixel headroom signal,
- a step 115 of calculating pixel enhancement factors, and
- a step 120 of modifying the respective sub-image on the basis of the pixel enhancement factor.

The present invention involves a step 110 of calculating a pixel headroom signal. The pixel headroom signal quantifies the margin available for enhancement of pixel values of pixels in the image. The available margin is spread across sub-images in such a way that, when pixels in the respective sub-images are modified within their respective fraction of the pixel headroom, the combined pixel values of the modified sub-images will not overshoot. Consequently, there is no need for clipping or saturation in order to prevent image distortion in the output image. Alternatively, a small amount of clipping may be allowed to improve the perceived enhancement. In a first variant, a single pixel headroom signal is calculated for the image and the available headroom is subsequently distributed across the various sub-images, for example, by allocating a predefined fraction of the entire pixel headroom for enhancing the respective sub-images. This work mode has the disadvantage that headroom which is not consumed in enhancing a particular sub-image is lost.

In a second variant, which is particularly useful when sub-images are processed sequentially, a pixel headroom signal is calculated before processing each sub-image to be modified, and the respective pixel headroom signals account for pixel headroom consumed in previously modified sub-images. As a result, headroom that is not consumed in enhancing one or more sub-images can be used for enhancing further subsequent sub-images.

In a third variant, the pixel headroom signal calculated before processing is subsequently used as a basis for establishing the potential for enhancing the respective sub-images. As a result, the pixel headroom signal can be used to determine the preferred order of sub-image modification in an image-dependent manner. Although the third variant is more computationally intensive, it allows prioritization of the enhancement of individual sub-images.

The embodiment shown in Fig. 1 uses the second variant described above, wherein a pixel headroom signal is calculated for every sub-image to be modified, taking into account headroom consumed by modifying previous sub-images.

The pixel headroom signal in this variant quantifies the margin available for enhancing pixel values of pixels in each respective sub-image. The modification of pixel values in the image as shown in Fig. 1 is an iterative process. During every iteration, the remaining pixel headroom is established. The pixel headroom available in the original image is spread iteratively across all sub-images in such a way that pixels in the respective sub-images are modified within the margin indicated by their respective pixel headroom signal. In order to spread the pixel headroom across the various sub-images, the pixel enhancement factors used for enhancing pixels in sub-images are calculated in dependence upon the available pixel headroom. The resulting enhancement of pixel values of the corresponding pixels in the output image will not give rise to an overshoot.

The present invention has for its object to prevent or limit the amount of overshoot, and thereby reduce or minimize the necessity of clipping. The amount of pixel headroom consumed in modifying the first sub-image will affect the amount of headroom available for enhancing further sub-images. It should be noted that the flow chart in Fig. 1 represents only a single implementation and various alternatives can be envisaged.

The next step 115 comprises calculating the pixel enhancement factors which, for pixels within the sub-image, are based on the pixel headroom signal calculated for the sub-image. In this embodiment, the pixel enhancement factors are dependent on the pixel headroom signal calculated for the image as well as on pixel headroom used in previous enhancements of other sub-images. Although all pixels are enhanced in this embodiment, it is possible to use masks and enhance only certain areas or segments of a sub-image without departing from the scope of the present invention.

In this embodiment, the pixel headroom signal is used to establish the maximum linear gain for a pixel of a sub-image that does not result in clipping. Based on this information, it is possible to calculate a pixel enhancement factor for a particular pixel of the sub-image. The pixel enhancement factor can be calculated by using the pixel headroom signal for the pixel and the respective pixel value of the sub-image. If a particular amount of overshoot is tolerated, it is possible to choose a higher pixel enhancement factor than is allowed on the basis of the pixel headroom signal. It will be evident to the skilled person that this will require further measures such as (soft-)clipping in order to limit visual image distortion.

The third step 120 comprises modifying the sub-image of the multiple sub-images by using the calculated pixel enhancement factor. In practice, this involves the use of pixel enhancement factors of respective pixels in the sub-image and enhancement of pixel values of the respective pixels, using the corresponding pixel enhancement factors by multiplying them.

Once a modified sub-image is generated, the process of modifying sub-images can be repeated in a step 125, until all sub-images are processed and/or modified in step 125. Finally, the output image 145 is generated by combining the modified sub-images. In one embodiment, this can be accomplished through addition of all modified sub-images.

Although the flow chart in Fig. 1 depicts the output image generation outside the sub-image modification loop, the generating step 135 can also be incorporated in the sub-image modification loop. In that case, each loop iteration results in an intermediate output image wherein all sub-images hitherto modified have been incorporated. The intermediate output image may be used to help establish a pixel headroom signal for subsequent sub-images, as the intermediate output image already accounts for all previously modified sub-images.

When sub-images are processed iteratively and a pixel headroom signal is calculated every iteration, the order of sub-image processing is relevant. Pixel headroom consumed during modification of a sub-image will no longer be available for modification of further sub-images. It may therefore be important to prioritize sub-image processing.

In a first variant, prioritization is image-independent. Sub-images are processed in an order ranging from high-frequency sub-images to low-frequency sub-images. As a result, the maximum amount of headroom is available for enhancing high-frequency sub-images, and the remaining headroom is available for low-frequency sub-images. Consequently, the high-frequency sub-image transitions can be enhanced more, resulting in a sharpening effect.

In a further variant of the embodiment shown in Fig. 1, a pixel headroom signal is computed before commencing sub-image modification. Moreover, the respective pixel headroom signal is subsequently used to prioritize sub-image processing. A first strategy would be to favor the sub-image that allows most enhancement, resulting in a greedy sub-image prioritization strategy. Alternatively, a more subtle sub-image prioritization strategy can be envisaged such as selecting the sub-image that allows least enhancement and realizing these enhancements, before proceeding to sub-images that allow a more substantial enhancement. In this manner, the available pixel headroom is used to enhance regions that would not be enhanced in a greedy algorithm. This more subtle approach thus typically results in a more even enhancement over sub-images.

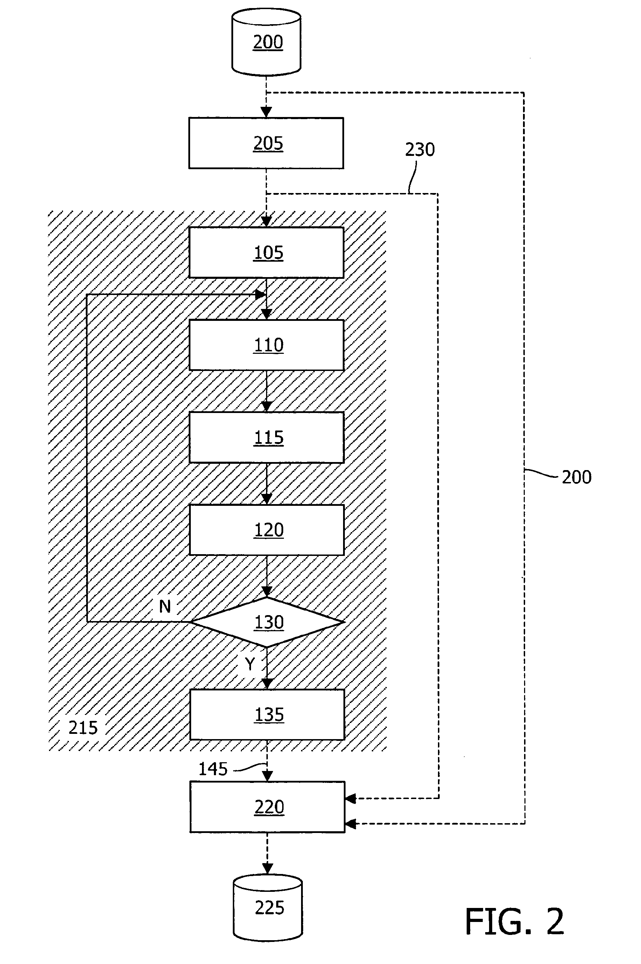

Fig. 2 is a flow chart of a preferred method of changing pixel values in a color image 200. Although the original color image in this embodiment has a YUV format, the present invention is not limited thereto. The advantage of using a YUV input is that it already comprises a separate luminance component. However, although it is possible to use the approach as presented in Fig. 1 for enhancing the luminance (Y) component of a color YUV image, while maintaining the chrominance information (U/V) of the color image, this approach may result in an unwanted loss of color saturation in bright areas and may lead to an unwanted increase of color saturation in dark areas.

To maintain color saturation of the color image, it is preferable to enhance color images by determining a scaling factor based on the luminance information in the image, and scaling the respective RGB components of the image accordingly. As a result, color saturation is substantially preserved.

Fig. 2 shows a preferred method of changing pixel values in a color image 200. The hatched area 215 comprises the core of the algorithm as described above. Starting from a color image 200, the luminance component 230 is isolated in a step 205 and used as input image 230 to generate, in a step 135, an output image 145 being an enhanced luminance image. Provided that the color image 235 is not an RGB representation, the color image 200 is converted, in a step 220, into an RGB representation. The RGB components are subsequently scaled in step 220 on a per-pixel basis, using a scaling factor based on the ratio of the pixel values of the enhanced luminance image, output image 145 over the pixel values of the original luminance image, and input image 230. The resulting enhanced color image 225 is output after scaling the RGB components.

A further preferred embodiment of the present invention has for its object to provide contrast enhancement and meanwhile prevent clipping and also to reduce "light-emission" artifacts that would result from enhancing regions with edges of high contrast. To this end, this embodiment sets out to enhance all frequency bands by the same amount, provided that sufficient headroom is available. Consequently when a region has sufficient headroom, this will result in mean-preserving global linear histogram stretching, an operation that will not cause "light-emission" artifacts.

In regions where there is insufficient headroom, this embodiment proposes iteration over all spatial scales from the finest scale (highest spatial frequency) to the coarsest scale (lowest spatial frequency), the latter scale representing the average luminance (the DC component) of the image, thereby favoring the high-frequency sub-images. Not all sub-images need to be included in the processing operation and, in one variant, the DC component is preserved in an unchanged form. Moreover, as described below in more detail, the pixel enhancement factors are generated in such a way that the variations in pixel enhancement factors show a smooth behavior within a sub-image, thereby effectively reducing "light-emission" artifacts within sub-images.

First, the input image 100, indicated by V in the equations, is split in a step 105 into $n$ sub-images $B^i$. In this particular embodiment, the individual sub-images are obtained through consecutive low-pass filtering, using a spatial low-pass filter $F^i_{LP}$ for scale $i$.

$$V^i_{LP} = F^i_{LP} \otimes V \tag{2}$$

wherein $\otimes$ denotes a spatial convolution. After low-pass filtering, the frequency band $B^i$ is extracted by subtracting subsequent low-pass filtered versions of the video.

$$B^i = V^i_{LP} - V^{i-1}_{LP} \tag{3}$$

In this particular embodiment, the processing order of the sub-images is predetermined from high to low and the first pixel headroom signal is computed first for the highest frequency sub-image. In this particular embodiment, two pixel headroom signals will be computed $\hat{H}^i_{up}$ and $\hat{H}^i_{do}$ for each sub-image. In order to establish these two pixel headroom signals, two intermediate signals are computed first: $H^i_{up}$ and $H^i_{do}$, see equations (4) and (5). $H^i_{up}(x, y)$ signifies the headroom for a pixel at position $(x, y)$ in the image towards the maximum pixel value $P_{max}$ and $H^i_{do}(x, y)$ signifies the headroom for a pixel at position $(x, y)$ towards the minimum pixel value $P_{min}$. The respective headroom signals are used to compute different pixel enhancement factors for positive and negative pixel values of the present sub-image. This embodiment can thus emphasize dark details in substantially bright areas and emphasize bright details in substantially dark areas. If a single overall pixel headroom signal were used, this would not be possible due to lack of headroom on one side.

In order to calculate the pixel headroom signal, the present embodiment uses an intermediate signal $V^{i-1}_{ENH}$ that represents the intermediate result of the contrast enhancement up to scale $i$. $V^{i-1}_{ENH}$ comprises previously modified sub-images as well as still unmodified sub-images and can be seen as an intermediate output image after processing

$i$ sub-images. $V^0_{ENH}$ is initialized as the original image $V$.

$$H^i_{up}(x, y) = ABS\left(P_{max} - V^{i-1}_{ENH}(x, y)\right) \qquad (4)$$

$$H^i_{do}(x, y) = ABS\left(P_{min} - V^{i-1}_{ENH}(x, y)\right) \qquad (5)$$

Subsequently, the pixel headroom signals $\hat{H}^i_{up}$ and $\hat{H}^i_{do}$ are calculated. In this particular embodiment, the pixel headroom signals are regional pixel headroom signals that take a spatial region $S$ around the respective pixels $(x, y)$ into account. In order to generate $\hat{H}^i_{up}$ and $\hat{H}^i_{do}$ for a pixel $(x, y)$, the regional minimum of $H^i_{up}(x, y)$ and the regional maximum of $H^i_{do}(x, y)$ are established for the region $S$. Subsequently, the pixel headroom signals are filtered to ensure that the pixel enhancement factors based upon the respective pixel headroom filters fall within the frequency range of the pixel values in the respective sub-image.

$$\hat{H}^i_{up}(x, y) = F^i_{LP} \otimes \left(MIN\left(H^i_{up}(S)\right)\right) \qquad (6)$$

$$\hat{H}^i_{do}(x, y) = F^i_{LP} \otimes \left(MIN\left(H^i_{do}(S)\right)\right) \qquad (7)$$

For best results, the aperture $S$ should be equal to or larger than the filter aperture of $F^i_{LP}$. In this particular embodiment, the spatial low-pass filter used to split the image into sub-images is also used to form the pixel headroom signals.

The calculated pixel headroom signals are subsequently used to calculate the pixel enhancement factor $g^i(x, y)$ for respective pixels within the sub-image. In this embodiment, the pixel enhancement factors are calculated by using either $\hat{H}^i_{up}$ or $\hat{H}^i_{do}$ depending on the pixel value of the respective pixel in the sub-image.

$$g^i(x, y) = CLIP\left(0, \alpha\left(\hat{H}^i_{do}(x, y) \Big/ B^i(x, y)\right), g_{max}\right) \text{ for } B^i(x, y) < 0 \quad (8)$$

$$g^i(x, y) = CLIP\left(0, \alpha\left(\hat{H}^i_{up}(x, y) \Big/ B^i(x, y)\right), g_{max}\right) \text{ for } B^i(x, y) \geq 0 \quad (9)$$

As can be seen from equations (8) and (9), the pixel enhancement factors are bounded by a maximum overall pixel gain $g_{max}$ that is the same for all bands. Provided that sufficient headroom is available, the gains will be $g_{max}$ for all pixels in all sub-images resulting in a mean-preserving global histogram stretch. However, if the headroom is insufficient, the pixel enhancement factor will be based on either $\hat{H}^i_{do}(p, l) \Big/ B^i(p, l)$ or $\hat{H}^i_{up}(p, l) \Big/ B^i(p, l)$ which quantifies the maximum linear gain in a region that does not result in clipping.

The parameter $\alpha$ with a user-defined value between 0 and 1 allows distribution of the available pixel headroom across the various sub-images. Only a fraction $\alpha$ of the available headroom will be used for enhancements in each sub-image to be modified. By using a fractional pixel headroom allocation, the headroom is gradually distributed across all sub-images. In this particular embodiment, a fraction $\alpha$ of the maximum linear gain can be used for enhancing $B^1$, a fraction of $\alpha$ $(1- \alpha)$ can be used for $B^2$, i.e. provided that the fraction $\alpha$ was used for enhancing $B^1$. If not all headroom

allocated to $B^1$ is used, a fraction $\alpha$ of the <u>remaining</u> maximum linear gain after enhancement of $B^1$ will be used for enhancing $B^2$.

The above mechanism limits the pixel enhancement factors within a sub-image. Moreover, through the use of a regional pixel headroom signal, which is additionally filtered to match the sub-image frequency band, the pixel enhancement factors show a smooth behavior in the frequency domain. This in turn prevents the creation of halo artifacts that may appear as false-light emissions and false shadows around high-contrast edges. Although this does not reduce halo artifacts that are already present in the input image, it does reduce the probability of introducing additional halo artifacts.

Once the pixel enhancement factors are calculated, the sub-image can be modified, resulting in modified sub-image $\hat{B}^i$.

$$\hat{B}^i = g^i B^i \qquad\qquad (10)$$

When the modified sub-image is available, the enhanced image $V^i_{ENH}$ can be computed for use in processing subsequent sub-images, or, alternatively, when all sub-images have been processed to obtain an enhanced luminance image.

$$V^i_{ENH} = \sum_1^i \hat{B}^i + \sum_{i+1}^n B^i \qquad\qquad (11)$$

Although it is possible to use the above embodiment for processing the luminance component of a YUV color image and preserving the U and V components as is, this may result in unwanted de-saturation in bright areas, and over-saturation in dark areas. To preserve saturation, it is preferable to use the ratio of the enhanced luminance component over the original luminance component so as to scale the image in a constant saturation direction, for example, by converting the YUV representation into an RGB representation and scaling the individual RGB components.

$$R_{ENH} = \left(V_{ENH}/V\right) R \qquad\qquad (12a)$$

$$G_{ENH} = \left(V_{ENH}/V\right) G \qquad\qquad (12b)$$

$$B_{ENH} = \left(V_{ENH}/V\right) B \qquad\qquad (12c)$$

As the above embodiment favors sub-images comprising high-frequency components, it may also sharpen noise. This noise may be introduced in part by DCT quantization. DCT quantization artifacts often result in small differences between the minimum and maximum pixel values within a region of a sub-image.

In order to prevent enhancement of such artifacts, it is possible to detect the occurrence of such quantization noise and subsequently overrule the pixel enhancement factor calculation. In order to detect DCT quantization noise, one can determine the minimum and maximum pixel value within the region S around a pixel and determine whether the absolute difference between the minimum and maximum is below a threshold value. If the value is below a threshold, the pixel enhancement factor is set to a value lower than 1 in order to attenuate the effect, and if the value is above the threshold, the pixel enhancement factor is based on the available pixel headroom signal instead.

It will be clear to the skilled person that, instead of using a single threshold, a more gradual scheme can be implemented that uses multiple thresholds, or, alternatively, the difference of the minimum and maximum so as to implement a more gradual transition from enhancement to attenuation.

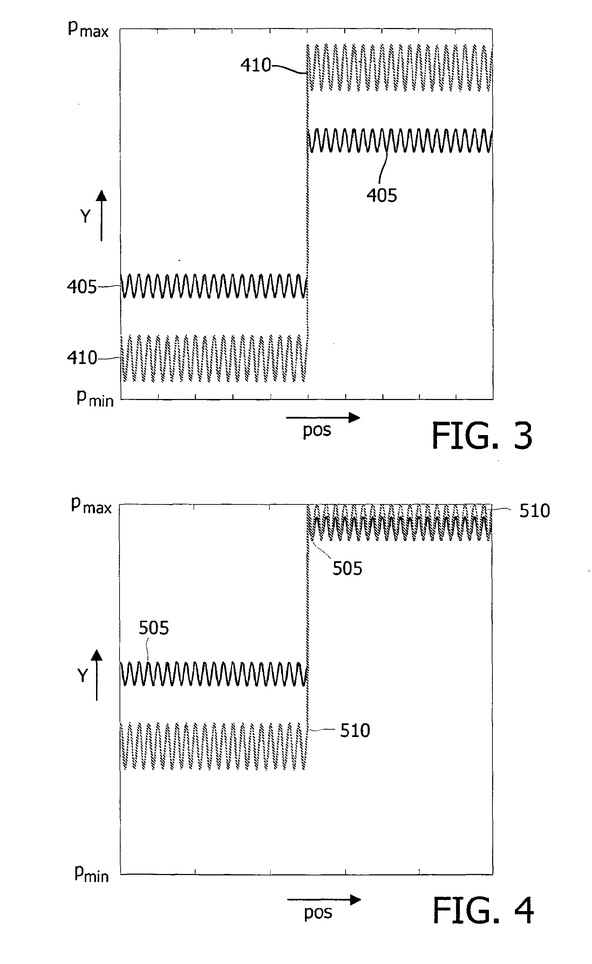

Fig. 3 is a schematic representation illustrating aggressive uniform histogram stretching. The first curve 405 shows the luminance values of pixels on the line before aggressive uniform histogram stretching, and the second curve 410 shows the luminance values of the pixels on the line after aggressive uniform histogram stretching. The enhancement in Fig. 3 is similar to that of the present invention, provided that the pixel enhancement factors are upper-bounded to a maximum and sufficient headroom is available.

Fig. 4 is a schematic representation illustrating theoretical enhancement in the absence of sufficient headroom for aggressive uniform histogram stretching. The first curve 505 shows the luminance values before theoretical enhancement, and the second curve 510 shows the luminance values after theoretical enhancement. Fig. 4 illustrates that there is insufficient headroom for performing a mean-preserving global histogram stretch due to the lack of headroom in the upper right part of the curve 505. The second curve 510 illustrates that, in spite of this lack of headroom, it is possible to enhance the high-frequency sine without overshoot and/or clipping in the top right of the Figure. It also illustrates that, by applying local enhancement, such as through the use of multi-scale enhancement, the sine at the bottom left can be enhanced more than the sine at the top right. Finally, the second curve 510 also indicates how pixel headroom may be used first to enhance the high-frequency components, thereby enhancing the sine amplitude in favor of the low-frequency components.

The above-described embodiment has for its object to realize similar results as those presented in Fig. 4, by processing sub-images in a high-to-low frequency order, by allocating a fraction of the (remaining) headroom to the respective sub-images, and by determining upward and downward pixel enhancement factors independently.

Although an input image may be split into sub-images of equally sized frequency bands, the present invention is not limited thereto. It will be evident that changing the size of the frequency band will affect the ratio of available headroom over frequency range, and may therefore require adaptation of the fraction of the available margin for enhancement over the various sub-images. Moreover, it is within the scope of the present invention to separate the DC-component of the image, treat this as a separate sub-image and optionally force the pixel enhancement factor of the DC-component to 1.

As mentioned before, the order of processing sub-images also affects the margin available for enhancement of individual sub-images. When the first sub-image is to be enhanced, all pixel headroom is still available and the entire fraction of pixel headroom available for enhancing the first sub-image may be used. By lowering the fraction of headroom allocated to the first sub-image, the "greedy" nature of the algorithm can be moderated.

As illustrated above, the present invention may be used to modify pixel values within both still images and/or video sequences. It can be embodied in a stand-alone image enhancement device, or integrated in other video-processing devices. These devices include those arranged to process video, and are not limited to devices for rendering, but may also include devices for capturing, storing and/or distributing images and video sequences.

The present invention may be readily integrated in a wide range of devices such as displays, video displays, digital still cameras, video cameras, video recorders, hard-disk recorders, television sets, video cards for personal computers, LCD-displays, plasma-displays, electrophoretic displays, mobile phones, personal digital assistants (PDAs), hand-held video-rendering devices, or hand-held game consoles.

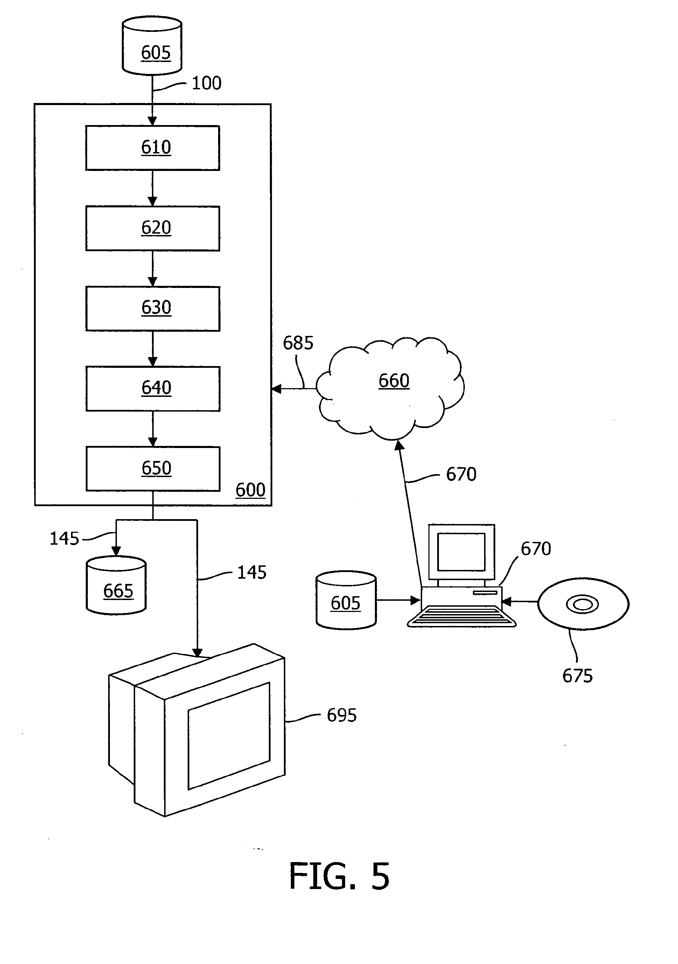

Fig. 5 shows an apparatus 600 for modifying pixel values within images according to the present invention. A database 605 supplies the apparatus 600 with an input image 100 comprising pixel values which are representative of the image luminance.

The apparatus 600 comprises a splitting means 610 arranged to split an image into multiple sub-images, each one of the multiple sub-images comprising information from a respective frequency band of the input image 100.

The apparatus 600 further comprises a first calculating means 620 arranged to calculate a pixel headroom signal quantifying the margin available for enhancing pixel values of pixels in the input image 100, the pixel headroom signal being based at least in part on the input image.

The apparatus 600 further comprises a second calculating means 630 arranged to calculate pixel enhancement factors for pixels within respective sub-images to be modified in dependence upon the pixel headroom signal, such that the margin as quantified by the pixel headroom signal is spread across the respective sub-images to be modified, and a modifying means 640 arranged to modify the respective sub-images to be modified by using the pixel enhancement factors and the corresponding pixel values from the respective sub-images. In addition, the apparatus 600 further comprises a generating means 650 arranged to generate an output image 145 by using the modified sub-images. The output image 145 is sent to both a further database 665 and to a display device 695 for displaying the output image 145.

Optionally, an apparatus 600 may provide an input for an image signal 685 according to the present invention, in which the image signal comprises pixel values forming an image and a set of pixel enhancement factors allowing enhancement of the image, and the generated pixel enhancement factors use a method according to the present invention. Using this signal, the apparatus 600 may subsequently enhance the image comprised in the signal by directly using the pixel enhancement factors. Such pixel enhancement factors may be acquired by using e.g. equations (12a), (12b), and (12c).

The image signal 685 in Fig. 5 is received over a network 660 and is generated by a personal computer 670 executing a method according to the present invention. The instructions required by the personal computer 670 for executing the method may be supplied to the personal computer 670 by a record carrier 675 such as an optical disc, a solid-state memory card, or alternate machine-readable storage means comprising said information.

It will be evident to the skilled person that a method of modifying pixel values according to the present invention can be implemented on a dedicated hardware platform such as an Application Specific Integrated Circuit (ASIC), or on a general-purpose microprocessor in a personal computer (PC). In fact, the method may be implemented partially in dedicated hardware and partially in software running on a programmable processor.

It should be noted that the above-mentioned embodiments illustrate rather than limit the invention, and that those skilled in the art will be able to design many alternative embodiments without departing from the scope of the appended claims.

In the claims, any reference signs placed between parentheses shall not be construed as limiting the claim. Use of the verb "comprise" and its conjugations does not exclude the presence of elements or steps other than those stated in a claim. Use of the article "a" or "an" preceding an element does not exclude the presence of a plurality of such elements.

The invention can be implemented by means of hardware comprising several distinct elements and by means of a suitably programmed computer. In the device claim enumerating several means, several of these means can be embodied by one and the same item of hardware. The mere fact that certain measures are recited in mutually different dependent claims does not indicate that a combination of these measures cannot be used to advantage.

**Claims**

1. A method of computing an output image (145) on the basis of an input image (100), the method comprising the steps of:

   - splitting (105) the input image (100) into multiple sub-images, each multiple sub-image comprising information from a respective frequency band of the input image (100);
   - calculating (110) a pixel headroom signal quantifying the margin available for enhancement of pixel values of pixels in the input image (100), the pixel headroom signal being based at least in part on the input image (100);
   - calculating (115) pixel enhancement factors for pixels within respective sub-images to be modified in dependence upon the pixel headroom signal, such that the margin as quantified by the pixel headroom signal is spread across the respective sub-images to be modified;
   - modifying (120) the respective sub-images to be modified by using the pixel enhancement factors and the corresponding pixel values from the respective sub-images; and
   - generating (135) the output image (145) by using the modified sub-images.

2. The method of claim 1, wherein the pixel headroom signal is calculated so as to allow enhancement of the input image (100) with a predetermined amount of clipping.

3. The method of claim 1, wherein the sub-images to be modified are modified consecutively, and wherein a pixel headroom signal is calculated for each sub-image to be modified, taking into account the amount of margin consumed in previously modified sub-images of the multiple sub-images.

4. The method of claim 1, wherein the order of sub-image processing is established by calculating a pixel headroom signal and correlating this signal with respective sub-images so as to establish the potential for enhancement in the respective sub-images in order to decide on the order of sub-image processing.

5. The method of claim 1, wherein the multiple sub-images are processed by starting with the sub-image comprising information in the highest frequency range of the input image (100) to the sub-image comprising information in the lowest frequency range of the input image (100).

6. The method of claim 1, wherein:

   - the pixel headroom signal quantifies the margin of the pixel values of respective pixels of the input image (100) to a maximum;
   - a further pixel headroom signal is calculated by quantifying the margin of the pixel values of respective pixels of the input image (100) to a minimum; and
   - the pixel enhancement factor is based on the pixel headroom signal, provided that the pixel value of the pixel of the sub-image is positive, and is based on the further pixel headroom signal, provided that the pixel value of the pixel of the sub-image is negative.

7. The method of claim 1, wherein the pixel headroom signal takes into account the spatial profile of the pixel headroom in the neighborhood of respective pixels by calculating a pixel headroom signal that quantifies the smallest pixel headroom in an area surrounding the respective pixels.

8. The method of claim 1, wherein the pixel headroom signal is filtered by using a different filter for each respective sub-image to be modified in order to calculate pixel enhancement factors that comprise frequency components within the same frequency range as the respective sub-image.

9. The method of claim 1, wherein the pixel enhancement factor is limited by a single maximum pixel enhancement factor value for all sub-images.

10. The method of claim 1, wherein the pixel enhancement factor is based on the maximum linear gain of a pixel in a sub-image without clipping, attenuated by a scaling factor $\alpha$ within the range from 0 to 1.

11. The method of claim 10, wherein the pixel enhancement factor is set to attenuate a pixel, when the difference between the maximum and minimum pixel value of pixels of the sub-image within a predefined region around the pixel is below a threshold value.

12. The method of claim 1, wherein the input image (230) consists of a luminance component of a color image (200) and the output image (145) represents an enhanced luminance component of the color image (200), and wherein the ratio of the enhanced luminance component over the original luminance component is used for scaling the RGB components of the color image (200).

13. An apparatus (600) for computing an output image (145) on the basis of an input image (100), the apparatus (600) comprising:

   - splitting means (610) arranged to split an image into multiple sub-images, each one of the multiple sub-images comprising information from a respective frequency band of the input image (100);
   - first calculating means (620) arranged to calculate a pixel headroom signal quantifying the margin available for enhancement of pixel values of pixels in the input image (100), the pixel headroom signal being based at least in part on the input image (100);
   - second calculating means (630) arranged to calculate pixel enhancement factors for pixels within respective sub-images to be modified in dependence upon the pixel headroom signal, such that the margin as quantified by the pixel headroom signal is spread across the respective sub-images to be modified;
   - modifying means (640) arranged to modify the respective sub-images to be modified by using the pixel enhancement factors and the corresponding pixel values from the respective sub-images; and
   - generating means (650) arranged to generate an output image (145) by using the modified sub-images.

14. A computer program product tangibly embodied in a record carrier (675), the computer program product comprising instructions which, when executed, cause a processor to perform the steps of any one of the methods of claims 1 to 12.

**Patentansprüche**

1. Verfahren zur Berechnung eines Ausgangsbildes (145) auf der Grundlage eines Eingangsbildes (100), wobei das Verfahren die folgenden Schritte umfasst:

   - Aufspalten (105) des Eingangsbildes (100) in mehrere Teilbilder, wobei jedes der mehreren Teilbilder Informationen aus einem jeweiligen Frequenzband des Eingangsbildes (100) umfasst;
   - Berechnen (119) eines Pixel-Headroom-Signals, welches den zur Verbesserung von Pixelwerten von Pixeln in dem Eingangsbild (100) vorhandenen Margin quantifiziert, wobei das Pixel-Headroom-Signal zumindest teilweise auf dem Eingangsbild (100) basiert;
   - Berechnen (115) von Pixelverbesserungsfaktoren für Pixel innerhalb jeweiliger zu modifizierender Teilbilder in Abhängigkeit des Pixel-Headroom-Signals, so dass der Margin, wie von dem Pixel-Headroom-Signal quantifiziert, über die zu modifizierenden, jeweiligen Teilbilder verteilt wird;
   - Modifizieren (120) der zu modifizierenden, jeweiligen Teilbilder unter Verwendung der Pixelverbesserungsfaktoren und der entsprechenden Pixelwerte aus den jeweiligen Teilbildern; sowie
   - Erzeugen (135) des Ausgangsbildes (145) unter Verwendung der modifizierten Teilbilder.

2. Verfahren nach Anspruch 1, wobei das Pixel-Headroom-Signal berechnet wird, um eine Verbesserung des Eingangsbildes (100) bei einem vorgegebenen Umfang des Beschneidens zu ermöglichen.

3. Verfahren nach Anspruch 1, wobei die zu modifizierenden Teilbilder nacheinander modifiziert werden, und wobei, unter Berücksichtigung des Umfangs des Margins, der bei zuvor modifizierten Teilbildern der mehreren Teilbilder in Anspruch genommen wurde, ein Pixel-Headroom-Signal für jedes zu modifizierende Teilbild berechnet wird.

4. Verfahren nach Anspruch 1, wobei die Reihenfolge der Teilbildbearbeitung festgesetzt wird, indem ein Pixel-Headroom-Signal berechnet und dieses Signal jeweiligen Teilbildern zugeordnet wird, um das Potential zur Verbesserung bei den jeweiligen Teilbildern festzulegen und über die Reihenfolge der Teilbildbearbeitung zu entscheiden.

5. Verfahren nach Anspruch 1, wobei die mehreren Teilbilder, beginnend mit dem Teilbild mit Informationen in dem höchsten Frequenzbereich des Eingangsbildes (100) bis hin zu dem Teilbild mit Informationen in dem niedrigsten Frequenzbereich des Eingangsbildes (100), bearbeitet werden.

6. Verfahren nach Anspruch 1, wobei:

   - das Pixel-Headroom-Signal den Margin der Pixelwerte von jeweiligen Pixeln des Eingangsbildes (100) bis zu einem Maximum quantifiziert;
   - ein weiteres Pixel-Headroom-Signal durch Quantifizieren des Margins der Pixelwerte von jeweiligen Pixeln des Eingangsbildes (100) bis zu einem Minimum berechnet wird; und
   - der Pixelverbesserungsfaktor auf dem Pixel-Headroom-Signal basiert, vorausgesetzt, dass der Pixelwert des Pixels des Teilbildes positiv ist, und auf dem weiteren Pixel-Headroom-Signal basiert, vorausgesetzt, dass der Pixelwert des Pixels des Teilbildes negativ ist.

7. Verfahren nach Anspruch 1, wobei das Pixel-Headroom-Signal das räumliche Profil des Pixel-Headroom in der Nähe jeweiliger Pixel durch Berechnen eines Pixel-Headroom-Signals, welches den kleinsten Pixel-Headroom in einem die jeweiligen Pixel umgebenden Bereich quantifiziert, berücksichtigt.

8. Verfahren nach Anspruch 1, wobei das Pixel-Headroom-Signal gefiltert wird, indem für jedes zu modifizierende, jeweilige Teilbild ein anderes Filter verwendet wird, um Pixelverbesserungsfaktoren zu berechnen, die Frequenzkomponenten innerhalb des gleichen Frequenzbereichs wie das jeweilige Teilbild umfassen.

9. Verfahren nach Anspruch 1, wobei der Pixelverbesserungsfaktor durch einen einzelnen maximalen Pixelverbesserungsfaktorwert für sämtliche Teilbilder begrenzt ist.

10. Verfahren nach Anspruch 1, wobei der Pixelverbesserungsfaktor auf der maximalen, linearen Verstärkung eines Pixels in einem Teilbild ohne Beschneiden, abgeschwächt durch einen Skalierungsfaktor $\alpha$ innerhalb des Bereichs von 0 bis 1, basiert.

11. Verfahren nach Anspruch 10, wobei der Pixelverbesserungsfaktor so eingestellt ist, dass ein Pixel abgeschwächt wird, wenn die Differenz zwischen dem maximalen und minimalen Pixelwert von Pixeln des Teilbildes innerhalb eines vordefinierten Bereichs um das Pixel unterhalb eines Schwellenwertes liegt.

12. Verfahren nach Anspruch 1, wobei das Eingangsbild (230) aus einer Luminanzkomponente eines Farbbildes (200) besteht und das Ausgangsbild (145) eine verbesserte Luminanzkomponente des Farbbildes (200) darstellt, und wobei das Verhältnis der verbesserten Luminanzkomponente gegenüber der ursprünglichen Luminanzkomponente zur Skalierung der RGB-Komponenten des Farbbildes (200) verwendet wird.

13. Vorrichtung (600) zur Berechnung eines Ausgangsbildes (145) auf der Grundlage eines Eingangsbildes (100), wobei die Vorrichtung (600) umfasst:

   - Aufspaltungsmittel (610), die angeordnet sind, um ein Bild in mehrere Teilbilder aufzuspalten, wobei jedes der mehreren Teilbilder Informationen aus einem jeweiligen Frequenzband des Eingangsbildes (100) umfasst;
   - erste Berechnungsmittel (620), die angeordnet sind, um ein Pixel-Headroom-Signal, welches den zur Verbesserung von Pixelwerten von Pixeln in dem Eingangsbild (100) vorhandenen Margin quantifiziert, zu berechnen, wobei das Pixel-Headroom-Signal zumindest teilweise auf dem Eingangsbild (100) basiert;

- zweite Berechnungsmittel (630), die angeordnet sind, um Pixelverbesserungsfaktoren für Pixel innerhalb jeweiliger zu modifizierender Teilbilder in Abhängigkeit des Pixel-Headroom-Signals zu berechnen, so dass der Margin, wie von dem Pixel-Headroom-Signal quantifiziert, über die zu modifizierenden, jeweiligen Teilbilder verteilt wird;

- Modifizierungsmittel (640), die angeordnet sind, um die zu modifizierenden, jeweiligen Teilbilder unter Verwendung der Pixelverbesserungsfaktoren und der entsprechenden Pixelwerte aus den jeweiligen Teilbildern zu modifizieren; sowie

- Erzeugungsmittel (650), die angeordnet sind, um unter Verwendung der modifizierten Teilbilder ein Ausgangsbild (145) zu erzeugen.

14. Computerprogrammprodukt, welches in einem Aufzeichnungsträger (675) konkret ausgeführt ist, wobei das Computerprogrammprodukt Anweisungen umfasst, die bei Ausführung bewirken, dass ein Prozessor die Schritte gemäß den Verfahren nach den Ansprüchen 1 bis 12 durchführt.

**Revendications**

1. Procédé de calcul d'une image de sortie (145) sur la base d'une image d'entrée (100), le procédé comprenant les étapes suivantes consistant à :

- diviser (105) l'image d'entrée (100) en des sous-images multiples, chaque sous-image multiple comprenant de l'information en provenance d'une bande de fréquence respective de l'image d'entrée (100) ;
- calculer (110) un signal de hauteur de pixel quantifiant la marge qui est disponible pour l'amélioration de valeurs de pixel des pixels dans l'image d'entrée (100), le signal de hauteur de pixel étant basé au moins en partie sur l'image d'entrée (100) ;
- calculer (115) des facteurs d'amélioration de pixel pour des pixels dans des sous-images respectives à modifier en fonction du signal de hauteur de pixel de telle façon que la marge, telle que quantifiée par le signal de hauteur de pixel, soit répartie sur les sous-images respectives à modifier ;
- modifier (120) les sous-images respectives à modifier en utilisant les facteurs d'amélioration de pixel et les valeurs de pixel correspondantes en provenance des sous-images respectives ; et
- générer (135) l'image de sortie (145) en utilisant les sous-images modifiées.

2. Procédé selon la revendication 1, dans lequel le signal de hauteur de pixel est calculé de manière à permettre une amélioration de l'image d'entrée (100) avec une quantité prédéterminée d'écrêtage.

3. Procédé selon a revendication 1, dans lequel les sous-images à modifier sont modifiées consécutivement et dans lequel un signal de hauteur de pixel est calculé pour chaque sous-image à modifier, tenant compte de la quantité de marge qui est consommée dans des sous-images préalablement modifiées des sous-images multiples.

4. Procédé selon la revendication 1, dans lequel on établit l'ordre de traitement de sous-images en calculant un signal de hauteur de pixel et en corrélant ce signal avec des sous-images respectives de manière à établir le potentiel pour une amélioration dans les sous-images respectives afin de décider de l'ordre de traitement de sous-images.

5. Procédé selon la revendication 1, dans lequel on traite les sous-images multiples en commençant par la sous-image comprenant de l'information dans la plus haute gamme de fréquences de l'image d'entrée (100) à la sous-image comprenant de l'information dans la plus basse gamme de fréquences de l'image d'entrée (100).

6. Procédé selon la revendication 1, dans lequel :

- le signal de hauteur de pixel quantifie la marge des valeurs de pixel des pixels respectifs de l'image d'entrée (100) à un maximum ;
- on calcule un nouveau autre signal de hauteur de pixel en quantifiant la marge des valeurs de pixel des pixels respectifs de l'image d'entrée (100) à un minimum ; et
- le facteur d'amélioration de pixel est basé sur le signal de hauteur de pixel pourvu que la valeur de pixel du pixel de la sous-image soit positive et est basé sur le nouveau autre signal de hauteur de pixel pourvu que la valeur de pixel du pixel de la sous-image soit négative.

7. Procédé selon la revendication 1, dans lequel le signal de hauteur de pixel tient compte du profil spatial de la hauteur

**EP 2 059 902 B1**

de pixel à proximité des pixels respectifs en calculant un signal de hauteur de pixel qui quantifie la plus petite hauteur de pixel dans une zone qui entoure les pixels respectifs.

8. Procédé selon la revendication 1, dans lequel le signal de hauteur de pixel est filtré par l'utilisation d'un filtre différent pour chaque sous-image respective à modifier afin de calculer des facteurs d'amélioration de pixel qui comprennent des composantes fréquentielles dans la même gamme de fréquences que la sous-image respective.

9. Procédé selon la revendication 1, dans lequel le facteur d'amélioration de pixel est limité par une seule valeur maximale du facteur d'amélioration de pixel pour toutes les sous-images.

10. Procédé selon la revendication 1, dans lequel le facteur d'amélioration de pixel est basé sur le gain linéaire maximal d'un pixel dans une sous-image sans écrêtage qui est atténuée par un facteur d'échelle $\alpha$ dans la gamme comprise entre 0 et 1.

11. Procédé selon la revendication 10, dans lequel le facteur d'amélioration de pixel est réglé de manière à atténuer un pixel lorsque la différence entre la valeur de pixel maximale et minimale des pixels de la sous-image dans une région prédéfinie autour du pixel se situe au-dessous d'une valeur de seuil.

12. Procédé selon la revendication 1, dans lequel l'image d'entrée (230) se compose d'une composante de luminance d'une image en couleur (200) et dans lequel l'image de sortie (145) représente une composante de luminance améliorée de l'image en couleur (200), et dans lequel le rapport de la composante de luminance améliorée à la composante de luminance originale est utilisé pour la mise à échelle des composantes RVB de l'image en couleur (200).

13. Appareil (600) pour calculer une image de sortie (145) sur la base d'une image d'entrée (100), l'appareil (600) comprenant :

- des moyens de division (610) qui sont agencés de manière à diviser une image en des sous-images multiples, chacune des sous-images multiples comprenant de l'information en provenance d'une bande de fréquence respective de l'image d'entrée (100) ;
- des premiers moyens de calcul (620) qui sont agencés de manière à calculer un signal de hauteur de pixel quantifiant la marge qui est disponible pour une amélioration des valeurs de pixel des pixels dans l'image d'entrée (100), le signal de hauteur de pixel étant basé au moins en partie sur l'image d'entrée (100) ;
- des deuxièmes moyens de calcul (630) qui sont agencés de manière à calculer des facteurs d'amélioration de pixel pour des pixels dans des sous-images respectives à modifier en fonction du signal de hauteur de pixel de telle façon que la marge, telle que quantifiée par le signal de hauteur de pixel, soit répartie sur les sous-images respectives à modifier ;
- des moyens de modification (640) qui sont agencés de manière à modifier les sous-images respectives à modifier en utilisant les facteurs d'amélioration de pixel et les valeurs de pixel correspondantes en provenance des sous-images respectives ; et
- des moyens de génération (650) qui sont agencés de manière à générer une image de sortie (145) en utilisant les sous-images modifiées.

14. Produit de programme informatique étant incorporé tangiblement dans un support d'enregistrement (675), le produit de programme informatique comprenant des instructions qui effectuent, lorsqu'elles sont exécutées, qu'un processeur réalise les étapes selon l'un quelconque des procédés des revendications précédentes 1 à 12.

```
        ┌─────────┐
        │   100   │
        └────┬────┘
             ┊
             ▼
      ┌──────────────┐
      │     105      │
      └──────┬───────┘
             │
    ┌───────►│
    │        ▼
    │ ┌──────────────┐
    │ │     110      │
    │ └──────┬───────┘
    │        │
    │        ▼
    │ ┌──────────────┐
    │ │     115      │
    │ └──────┬───────┘
    │        │
    │        ▼
    │ ┌──────────────┐
    │ │     120      │
    │ └──────┬───────┘
    │        │
    │        ▼
    │  N    ╱────────╲
    └──────◄   125    │
           ╲────────╱
                │ Y
                ▼
      ┌──────────────┐
      │     135      │
      └──────┬───────┘
             ┊
             ▼
        ┌─────────┐
        │   145   │
        └─────────┘
```

# FIG. 1

FIG. 2

EP 2 059 902 B1

FIG. 3

FIG. 4

FIG. 5

**EP 2 059 902 B1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5717789 A